# NOUVEAU FASCICULE DE BREVET EUROPEEN

(11) **EP 1 327 804 B2**
(45) Date de publication et mention de la décision concernant l'opposition: **16.11.2016**
(45) Mention de la délivrance du brevet: 30.11.2005
(21) Numéro de dépôt: 03290068.0
(22) Date de dépôt: 10.01.2003
(51) Int. Cl.: F16K 1/30

(54) **Robinet pour bouteille de gaz sous pression**
Ventil für Druckbehälter
Valve for pressure bottle

(30) Priorité: 11.01.2002 FR 0200293
(43) Date de publication de la demande: 16.07.2003
(73) Titulaire: GCE SAS, 58404 La Charité sur Loire Cedex (FR)
(72) Inventeur: Rousselin, Guy, 18140 Herry (FR)
(74) Mandataire: Awapatent AB

(56) Documents cités:
- EP-A- 0 863 337
- EP-A- 0 869 310
- WO-A1-96/07843
- DE-U- 1 900 854
- US-A- 4 909 277
- US-B1- 6 182 692

## Description

La présente invention concerne un dispositif de robinet pour bouteille de gaz sous pression. La présente invention concerne plus particulièrement un dispositif de robinet à détendeur intégré pour bouteille d'oxygène comprimé destiné notamment dans le cas d'oxygénothérapie en milieu médical.

Il est connu dans l'art antérieur des robinets pour bouteille de gaz sous pression. Ces dispositifs comportent en règle générale un robinet de manoeuvre pour la sortie du gaz à haute pression et un robinet de manoeuvre pour régler le débit du gaz, en général détendu, vers la sortie. Ceci présente un inconvénient en particulier lors de l'utilisation dans le cadre d'urgences médicales. En effet, dans ce cas, l'utilisateur d'une bouteille d'oxygène équipée de deux robinets distincts, un pour la sortie du gaz haute pression et un autre pour régler le débit de sortie du gaz détendu vers le patient, doit effectuer deux mouvements successifs, un premier pour ouvrir le premier robinet puis un deuxième pour ouvrir le deuxième robinet. Ceci prend du temps et se fait au détriment du patient. De plus il peut arriver que l'utilisateur, un peu paniqué, se trompe de robinet ou n'ouvre pas les robinets dans le bon ordre.

Il est connu par le document US 6 182 692 un dispositif de robinet pour bouteille sous pression. Ce dispositif comprend un raccord pour se raccorder sur l'orifice de gaz d'une bouteille de gaz, au moins une sortie de gaz sous pression, et un volant dont la manoeuvre permet simultanément de commander la fermeture ou l'ouverture de la vanne pour libérer le gaz de la bouteille et de régler le débit de sortie du gaz libéré de la bouteille.

La présente invention a donc pour but de pallier les inconvénients de l'art antérieur en proposant un dispositif de robinet pour bouteille de gaz sous pression qui soit fiable et qui soit simple dans sa manipulation pour ouvrir la vanne haute pression et régler le débit du gaz.

Selon une autre particularité, l'axe vanne comporte les moyens de réglage du débit de la sortie du gaz libéré de la bouteille.

Selon une autre particularité, au moins deux orifices de calibrage différent sont percés à travers la pièce constituant une première extrémité de l'axe vanne, un troisième orifice étant percé dans le corps du robinet, ce dernier joignant la sortie de gaz, la deuxième partie de rotation du volant de commande mettant en vis-à-vis l'un des deux orifices et le troisième orifice pour déterminer le débit de passage du gaz vers la sortie.

Selon une autre particularité, en position d'ouverture ou de fermeture de la vanne du robinet, il comporte des moyens de maintien, qui lors de l'actionnement du volant, maintiennent le volant en saillie constante par rapport au corps du robinet.

Selon une autre particularité, les moyens de maintien de la saillie du volant par rapport au corps du robinet comportent des moyens de butée au mouvement du volant vers l'intérieur ou vers l'extérieur du corps du robinet.

Selon une autre particularité, la première et la deuxième extrémité de l'axe vanne comprennent chacune un crénelage collaborant avec celui de l'autre extrémité pour être solidaire en rotation.

Selon une autre particularité, la première et la deuxième extrémité sont reliés par un ressort venant serrer un joint pris entre la première extrémité et le corps du robinet.

Selon une autre particularité, les moyens mobiles d'ouverture et de fermeture de la vanne sont constitués d'un clapet ayant le mouvement de translation linéaire dans le corps du robinet.

Selon une autre particularité, la position extrême de butée est définie par une pièce maintenue fixe par rapport au corps du robinet par des moyens de maintien.

Selon une autre particularité, le clapet est monté sur un ressort, le clapet comportant des moyens de compression du ressort lorsque la deuxième extrémité vient appuyer sur l'extrémité du clapet.

Selon une autre particularité, le dispositif comporte un dispositif de détente des gaz placé en aval de la vanne de sortie du gaz de la bouteille.

Selon une autre particularité, comporte, entre le dispositif de détente et la vanne de sortie du gaz de la bouteille, un système à pression résiduelle au-dessous de laquelle un clapet ne laisse plus passer le gaz vers le dispositif de détente.

Selon une autre particularité, le dispositif comprend un manomètre joint par un conduit situé en amont de la vanne de sortie du gaz pour mesurer la pression dans la bouteille de gaz.

D'autres particularités et avantages de la présente invention apparaîtront plus clairement à la lecture de la description ci-après faite en référence aux dessins annexés dans lesquels :
- la figure 1 représente une vue de côté et en section partielle d'un dispositif de robinet selon l'invention,
- la figure 2 représente une vue de côté et en section partielle d'un dispositif de robinet selon l'invention, selon un plan perpendiculaire à celui de la figure 1,
- la figure 3 représente une vue de dessus et en section partielle du dispositif de robinet selon l'invention, selon A-A sur les figures 1 et 2,
- la figure 4 représente une vue de face d'un volant de commande du robinet selon l'invention,
- les figures 5a et 5b représentent respectivement en vue de dessus et en coupe suivant A-A de la figure 5a, une partie de l'axe vanne utilisé dans le dispositif selon l'invention,
- la figure 6 représente une vue en coupe longitudinale d'un clapet de fermeture de l'arrivée des gaz,
- les figures 7a et 7b représentent en coupe longitudinale, suivant deux plans perpendiculaires, une pièce presse étoupe utilisée dans le dispositif selon l'invention,
- les figures 8a et 8b représentent respectivement en vue de dessus et en coupe longitudinale un écrou presse étoupe utilisé dans le dispositif de robinet selon l'invention.

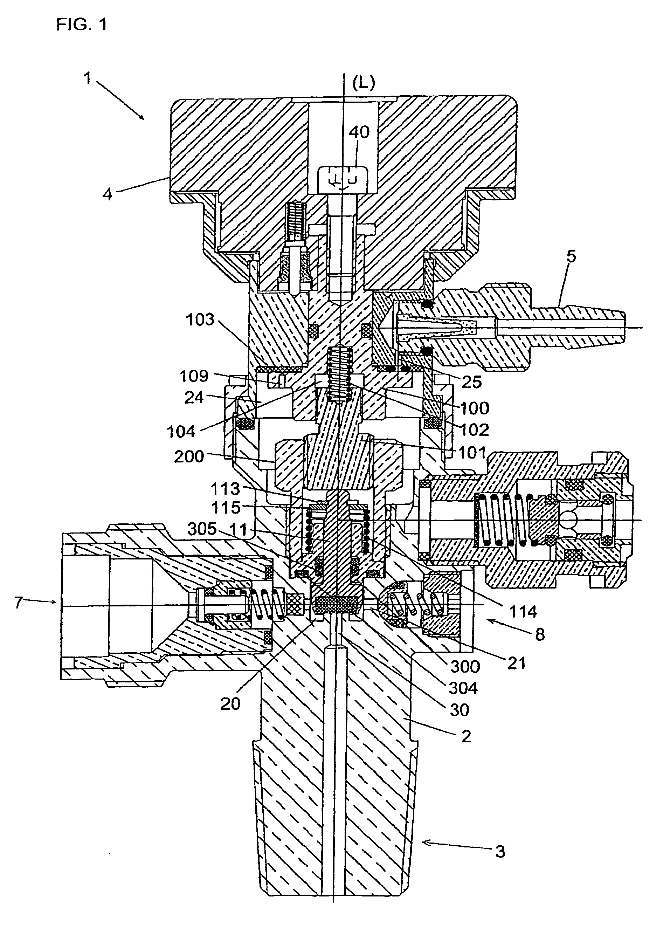

L'invention va à présent être décrite en liaison avec les figures 1 à 8b.

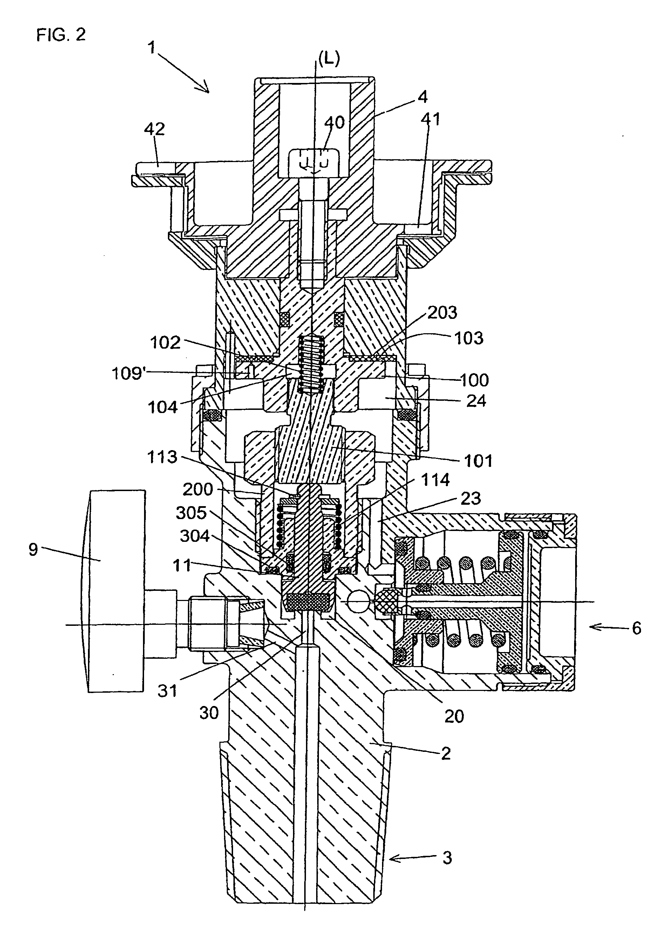

Le dispositif (1, fig. 1 et fig.2) de robinet selon l'invention est constitué d'un corps (2) dont la partie inférieure (3) est conique ou sensiblement cylindrique et filetée pour être montée de façon connue sur un orifice de sortie d'une bouteille de gaz. Le dispositif (1) comporte sur sa partie supérieure un volant (4) ou bouton de commande de l'ouverture et de la fermeture de la vanne des gaz. Ce dispositif (1) comporte également un dispositif (6) de détente du gaz délivré ainsi qu'une sortie (5) du gaz détendu du dispositif (1). A titre d'exemple, le dispositif (6) de détente ramène le gaz qui est par exemple à une pression de 200 bar dans la bouteille, à une pression de l'ordre de 3,5 bar. Un orifice (7) de remplissage est également prévu sur le corps (2) du dispositif (1) pour permettre le remplissage de la bouteille de gaz.

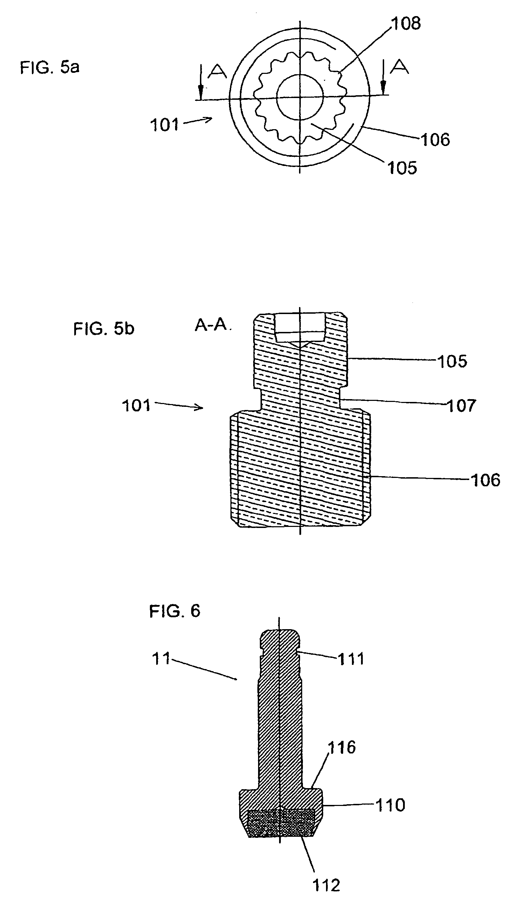

Selon l'invention, le volant (4) ou bouton de commande, lors de son actionnement, par une rotation, commande, par l'intermédiaire d'un axe vanne (10) la translation d'un clapet (11, fig.6) mobile chargé de réaliser l'ouverture ou la fermeture de l'arrivée (30) du gaz provenant de la bouteille. L'axe vanne (10) est constitué de deux parties (100, 101) reliées par des moyens élastiques tels que par exemple un ressort (102). Une première partie (100) de l'axe vanne (10) est solidaire du volant (4) de commande. Cette première partie (100) de l'axe vanne (10) est solidaire en rotation du volant en étant serrée par une de ses extrémités sur le volant (4), par exemple par une vis (40) dont l'extrémité vient se loger dans cette première partie (100). Cette première partie de l'axe vanne (10) est, sous l'action du volant (4), libre en rotation autour de son axe, confondu avec l'axe longitudinal (L) du dispositif (1) selon l'invention. Cette première partie (100) est constituée d'un corps cylindrique comportant un épaulement (103) radial venant, sous l'action du ressort (102), en appui contre un joint (203) s'appuyant lui même contre le corps (2) du dispositif (1). A l'extrémité opposée à l'extrémité de fixation de cette première partie (100) sur le volant (4) est formé, suivant l'axe (L) du dispositif (1), un trou (104) borgne. Au fond de ce trou (104) borgne est formé un évidement au fond duquel est fixé une extrémité du ressort (102), son autre extrémité étant solidaire de la deuxième partie (101) de l'axe vanne (10). Cette deuxième partie (101, fig. 5a et 5b) comporte sur son extrémité, dite supérieure, un évidement au fond duquel est fixé l'extrémité du ressort (102). Cette deuxième partie (101) comprend un corps cylindrique dont les extrémités (105, 106) sont de diamètres différents. Le diamètre de l'extrémité supérieure (105) de cette deuxième partie (101) est inférieur à celui de son extrémité inférieure (106). Ces deux extrémités sont séparées par une gorge (107). Un crénelage (108, fig.5a) est formé, suivant l'axe (L) du dispositif, sur la surface extérieure de l'extrémité supérieure (105) de cette deuxième partie (101). L'extrémité supérieure (105) crénelée est destinée à être logée dans le trou (104) borgne de la première partie (100), le trou (104) borgne étant pourvu sur sa surface interne d'un crénelage complémentaire, ces crénelages collaborant pour solidariser en rotation la première (100) et la deuxième (101) partie de l'axe vanne (10).

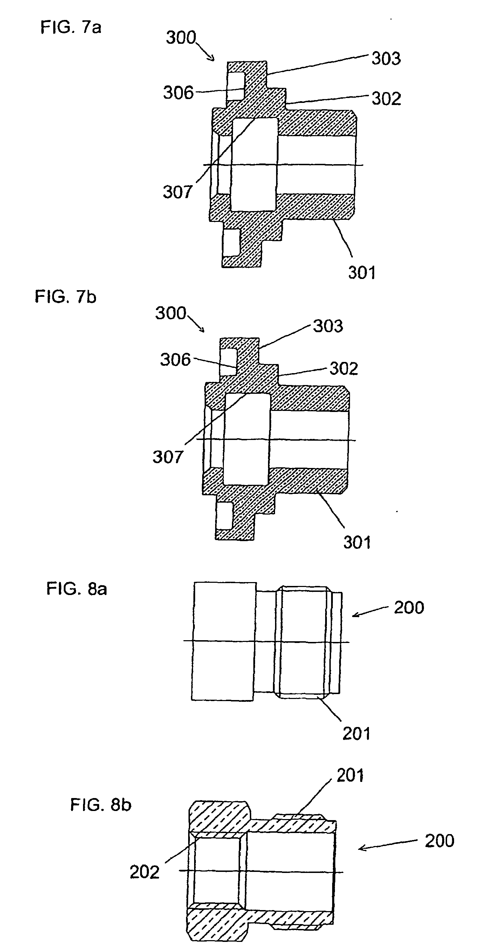

L'extrémité inférieure (106) de la deuxième partie (101) est filetée (109) sur sa surface externe et est vissée sur la portion (202) filetée d'un écrou (200, fig.8a et 8b) presse étoupe solidaire du corps (2) du dispositif (1). Cet écrou (200) comporte également une portion (201) filetée sur sa surface extérieure venant se visser dans le corps (2) du dispositif (1). L'écrou vissé dans le corps (2) du dispositif vient serrer une pièce (300, fig. 7a et 7b) presse étoupe contre le corps du dispositif (1). L'écrou (200) a donc la double fonction de recevoir l'extrémité inférieure (106) filetée de la deuxième partie (101) de l'axe vanne (10) et, en étant vissé sur le corps (2) du dispositif, de serrer la pièce (300) presse étoupe. Cette pièce (300) est constituée d'un corps (301) cylindrique creux, de diamètre inférieur au diamètre interne de l'écrou (200), et comporte, à une certaine distance de son extrémité supérieure et depuis cette extrémité, deux épaulements (302, 303) successifs, de diamètre croissant. L'écrou (200) a son extrémité inférieure vissée dans le corps (2) du dispositif qui vient en appui contre le deuxième épaulement (303) pour appuyer la surface opposée à l'épaulement (303) contre le corps (2) du dispositif (1). L'extrémité supérieure de cette pièce débouche dans l'écrou (200). L'extrémité inférieure du corps (301) de cette pièce (300) vient se loger dans un trou (20) formé dans le corps (2) du dispositif (1). Au fond de ce trou (20) est formé un siège sur lequel débouche le conduit d'arrivée (30) du gaz de la bouteille de gaz. Un autre conduit (21, fig.1) débouchant dans ce trou (20) et menant à un dispositif de pression résiduelle est formé dans le corps (2) du dispositif (1). Une gorge (306, fig.7a et fig.7b) annulaire est formée autour de l'axe du dispositif (1) sur la surface opposée au deuxième épaulement (303). Dans cette gorge (306) est disposé un joint (304, fig. 1 et fig.2) torique chargé de faire l'étanchéité entre la pièce (300) et le corps (2) du dispositif (1). Une autre gorge (307) annulaire est formée autour de l'axe (L) du dispositif (1) sur la surface interne de la pièce (300). Un joint (305) torique est également disposé dans cette gorge pour faire l'étanchéité entre le clapet (11) et la pièce (300). Les joints (304, 305) permettent d'éviter la propagation du gaz haute pression dans le dispositif (1) et le mélange du gaz haute pression avec le gaz détendu. Le clapet (11, fig.6) est constitué d'une tige cylindrique, dont l'axe est confondu avec l'axe (L) du dispositif (1), comportant à son extrémité inférieure une portion (110) de diamètre plus important formant un épaulement (116). La tige est introduite coaxialement dans la pièce (300) de sorte que son épaulement (116) puisse venir en butée contre la face inférieure de la pièce (300). La face inférieure de la tige du clapet (11) est percée d'un trou borgne dans lequel est logée une garniture (112) cylindrique en matériau thermoplastique ou en élastomère, sertie dans le clapet (11). En position de fermeture de la vanne, cette garniture vient s'appuyer contre le siège formé au fond du trou (20). Une gorge (111) annulaire est formée autour de l'axe (L) du dispositif (1) à proximité de l'extrémité supérieure de la tige du clapet (11). Dans cette gorge (111) est placé un circlip (113). Un ressort (114) entoure le corps (301) de la pièce (300) et vient en appui par son extrémité inférieure contre le premier épaulement (302) formé sur la pièce (300). Une rondelle (115) de diamètre équivalent à la section du ressort est placée entre l'extrémité supérieure du ressort (114) et le circlip (113). Le débattement maximum en translation du clapet (111) par rapport à la pièce (300) est très faible, pouvant aller de la position d'appui de la face inférieure de la garniture (112) du clapet (11) sur le siège pour obturer le conduit d'arrivée (30) du gaz à une position ouverte dans laquelle l'épaulement (116) du clapet vient en butée contre la face inférieure de la pièce (300).

En position de fermeture de la vanne, la garniture du clapet est en appui sur le siège du conduit d'arrivée (30) de gaz. Le clapet est alors en position basse. Dans cette position, l'extrémité supérieure du clapet (11) est en simple contact avec la face inférieure de la deuxième partie (101) de l'axe vanne (10) et suivant le vissage de l'extrémité inférieure (106) de la deuxième partie (101), le ressort (114) entourant la pièce (300) est plus ou moins comprimé.

Lors de la rotation du volant (4) de commande dans le sens de l'ouverture de la vanne, la rotation de l'axe vanne (10) solidaire du volant (4) provoque le dévissage, donc la remontée dans l'écrou (200), de l'extrémité inférieure (106) de la deuxième partie (101) de l'axe vanne (10). L'extrémité supérieure du clapet (11) étant, dans la position de fermeture de la vanne, simplement en contact avec la face inférieure de la deuxième partie (101) de l'axe vanne (10), l'action de la pression du gaz présent dans la bouteille ou l'action du ressort (114) permet la remontée du clapet qui coulisse suivant l'axe (L) du dispositif dans la pièce (300). Ce coulissement s'effectue jusqu'à ce que l'épaulement (116) formé sur le clapet (11) vienne en butée contre la face inférieure de la pièce (300) et/ou jusqu'à ce que l'extrémité supérieure du clapet (11) vienne en butée contre l'extrémité inférieure (106) de la deuxième partie (101) de l'axe vanne (10). Le conduit d'arrivée (30) de gaz n'est plus obturé et le gaz peut sortir de la bouteille.

Pour fermer la vanne, l'utilisateur tourne le volant dans l'autre sens pour venir visser l'extrémité inférieure (106) de la deuxième partie (101) de l'axe vanne pour la faire descendre et ainsi venir appuyer sur l'extrémité supérieure du clapet pour pousser le clapet (11). La garniture (112) du clapet vient alors obturer le conduit d'arrivée (30) de la bouteille. Le vissage pourra avoir lieu par exemple jusqu'à ce que la rondelle (115) vienne en appui contre la face supérieure de la pièce (300). Lors de la fermeture de la vanne, plus l'utilisateur vient appuyer sur le clapet, plus le ressort (114) est comprimé et plus le siège du conduit (30) d'arrivée de gaz s'enfonce dans la garniture (112) du clapet. Lorsque l'utilisateur souhaite ouvrir la vanne, alors que le siège est bien enfoncé dans la garniture (112) du clapet (11), le décollement de la garniture (112) sous la pression unique du gaz à haute pression peut s'avérer difficile. Le ressort (114) permet donc de favoriser ce décollement en se détendant lorsque la translation du clapet (11) est permise, c'est-à-dire lorsque l'extrémité inférieure de la première partie (101) de l'axe vanne (10) est remontée d'une certaine distance en étant dévissée de l'écrou (200).

Selon l'invention, le volant (4) lors de sa rotation dans le sens de l'ouverture ou de la fermeture fait saillie constante par rapport au corps (2) du dispositif (1). Ceci est permis grâce au ressort (102) reliant les deux parties (100, 101) de l'axe vanne (10). En effet, dans le cas par exemple du dévissage de l'extrémité inférieure de la deuxième partie dans l'écrou (200), la première partie (100) étant bloquée en translation vers l'extérieur et vers l'intérieur du dispositif (1), la remontée de la deuxième partie (101) est autorisée par la compression du ressort (102). Dans le cas du vissage de l'extrémité inférieure de la deuxième partie dans l'écrou (200), la descente de la deuxième partie (101) est permise par l'extension du ressort (102) reliant les deux parties (100, 101).

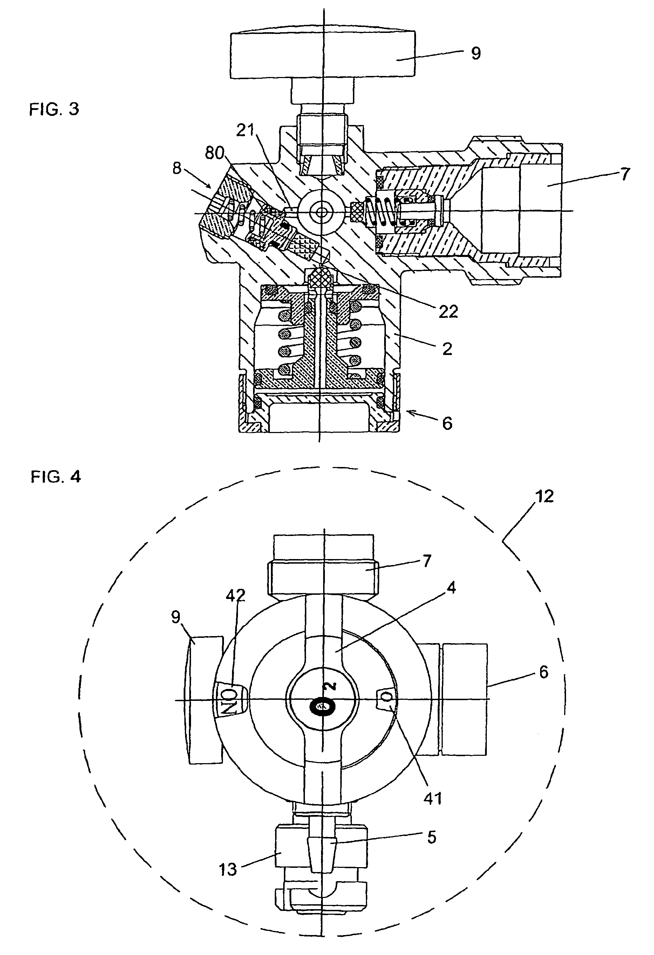

Selon l'invention, une première partie de rotation du volant (4) de commande permet de libérer le gaz haute pression de la bouteille de gaz. Une fois libérée, ce gaz passe par le conduit (21) formé dans le corps (2) du dispositif et débouchant par exemple dans un dispositif (8) de pression résiduelle. De manière connue, un tel dispositif (8) permet de ne jamais vider complètement la bouteille. En effet, dans le cas de bouteille d'oxygène à usage médical, il est nécessaire d'éviter la contamination de l'intérieur des bouteilles. Pour cela, la bouteille de gaz est conservée sous pression en y maintenant toujours une certaine quantité de gaz. Pour l'utilisateur la bouteille sera vide alors qu'elle ne l'est pas réellement. En fait, une certaine quantité de gaz sous pression sera toujours dans la bouteille. Pour cela, le dispositif (8) intégré au dispositif (1) de l'invention comprend un clapet (80, fig.3) monté sur un ressort (114). Lorsque le gaz arrive du conduit (21), la pression du gaz pousse le clapet (11) pour passer. Lorsqu'il ne reste que très peu de gaz dans la bouteille, la pression du gaz n'est plus suffisante pour pousser le clapet (80) du dispositif (8). Le gaz ne passe plus et reste donc dans la bouteille. Le ressort aura par exemple une constante de raideur définissant la pression, par exemple de 3 ou 4 bar, en dessous de laquelle le clapet (80) ne se déplace plus en translation. Ce dispositif (8) permet de ne pas contaminer la bouteille et celle-ci peut alors être remplie par l'orifice (7) de remplissage sans être nettoyée.

Une fois que le gaz haute pression est passé à travers le dispositif à pression résiduelle, un conduit (22, fig.3) formé dans le corps (2) du dispositif (1) débouche dans le dispositif (6) de détente de gaz. Le gaz est alors détendu.

Une fois détendu, par exemple à 3 ou 4 bar, le gaz détendu rejoint par un conduit (23, fig.2) un logement (24) formé dans le corps (2) du dispositif (1). De là, une deuxième partie de rotation du volant (4) de commande permet de laisser sortir le gaz par la sortie (5) du dispositif.

Selon l'invention, cette deuxième partie de rotation permet de régler le débit de sortie du gaz détendu. Ce débit sera par exemple affiché sur une fenêtre (41, fig.2 et fig.4) spécifique du volant (4) de commande.

Plusieurs orifices (109, 109') de calibres différents sont par exemple percés suivant un arc de cercle, parallèlement à l'axe (L) du dispositif (1), à travers la première partie (100) de l'axe vanne (10) par exemple au niveau de l'épaulement radial (103) de cette pièce. Ces orifices sont de calibres différents, c'est-à-dire qu'ils sont de diamètre égaux mais comportent chacun une section supérieure ouverte différente. Un conduit (25, fig. 1) est formé suivant l'axe (L) du dispositif (1) dans le corps (2) du dispositif, ce conduit (25) débouchant sur la sortie (5) du gaz. Ce conduit (25) est de diamètre au moins égal à la plus grande des sections supérieures des orifices (109, 109'). En vis-à-vis de ce conduit (25), le joint d'étanchéité (fig. 1), disposé entre la première partie (100) de l'axe vanne (10) et le corps (2) du dispositif, est également percé d'un orifice correspondant. Comme déjà décrit plus haut, la première partie de la rotation du volant (4) permet d'ouvrir la vanne et de libérer le gaz haute pression qui est alors détendu. La deuxième partie de la rotation met en vis-à-vis un des orifices (109, 109') formés à travers la première partie (100) de l'axe vanne et le conduit (25) formé dans le corps du dispositif (1). Le gaz détendu présent dans le logement (24) formé dans le corps du dispositif (1) peut alors passer dans l'orifice (109, 109') placé en vis-à-vis puis dans le conduit de sortie (5). Le volant comprendra par exemple des taquets d'arrêt placés correspondant chacun à la position en vis-à-vis d'un orifice (109, 109') par rapport au conduit (25), à chaque taquet correspondant également l'inscription dans la fenêtre (41, figure 4) visible sur le volant (41), du débit réglé par l'orifice (109, 109') placé en vis-à-vis du conduit (25).

Selon l'invention, le conduit d'arrivée (30) de gaz dans la bouteille comprend un conduit (31) parallèle menant à un manomètre (9) pour mesurer la pression du gaz contenu dans la bouteille.

Sur la figure 4, on peut voir, en vue de dessus, le dispositif (1) de robinet selon l'invention. Le dispositif est ici adapté sur une bouteille (12) d'oxygène dessinée en pointillés. Sur cette figure, on peut voir le manomètre (9) servant à mesurer la pression, le raccord (7) de remplissage de la bouteille, le raccord (5) de sortie du gaz, le dispositif (6) de détente et un raccord (13) rapide pour raccorder divers accessoires, placé juste au-dessous du raccord (5) de sortie du gaz. On peut voir également une fenêtre (42, fig.2) dans laquelle est indiqué si la vanne est ouverte ou non, et la fenêtre (41) d'affichage du débit.

Il doit être évident pour les personnes versées dans l'art que la présente invention permet des modes de réalisation sous de nombreuses autres formes spécifiques sans l'éloigner du domaine d'application de l'invention comme revendiqué. Par conséquent, les présents modes de réalisation doivent être considérés à titre d'illustration, mais peuvent être modifiés dans le domaine défini par la portée des revendications jointes, et l'invention ne doit pas être limitée aux détails donnés ci-dessus.

## Revendications

1. Dispositif (1) de robinet pour bouteille de gaz sous pression comportant un raccord pour se raccorder sur l'orifice de sortie de gaz d'une bouteille de gaz, ainsi qu'une sortie (5) de gaz sous pression, ledit dispositif comprenant un volant (4) comportant des moyens de commande de la fermeture de la vanne du robinet ou d'ouverture de la vanne pour libérer le gaz de la bouteille et des moyens de réglage du débit de la sortie du gaz libéré de la bouteille,
le volant (4) étant actionnable en rotation dans les deux sens, le volant (4) dans son mouvement de rotation dans le sens de l'ouverture, commandant dans une première partie de la rotation, l'ouverture de la vanne pour libérer le gaz de la bouteille et dans une deuxième partie de la rotation, le réglage du débit du gaz libéré vers la sortie (5) du robinet,
le volant (4) étant solidaire d'un axe vanne (10) monté par des moyens étanches dans le corps (2) du robinet, l'actionnement du volant (4) de commande commandant, par l'intermédiaire de l'axe vanne (10), des moyens (11) mobiles d'ouverture et de fermeture de la vanne de la bouteille,
ledit dispositif étant **caractérisé en ce que** la première extrémité (100) de l'axe vanne (10) est fixée sur le volant (4) et l'autre extrémité, dite deuxième extrémité (101), de l'axe vanne (10), est solidaire en rotation de la première extrémité (100) solidaire du volant (4) et libre en translation par rapport à la première extrémité (100), la deuxième extrémité (101) de l'axe vanne (10) étant vissée dans le corps (2) du robinet, la rotation du volant (4) commandant le mouvement hélicoïdal de la deuxième extrémité (101) de l'axe vanne (10) dans le corps (2) du robinet, les moyens mobiles ayant une liberté de translation entre une position extrême d'obturation de l'arrivée de gaz et, pour l'ouverture de l'arrivée du gaz, une position extrême de butée ou une position intermédiaire déterminée par la position de la deuxième extrémité (101) de l'axe vanne (10).

2. Dispositif (1) selon la revendication 1, **caractérisé en ce que** l'axe vanne (10) comporte les moyens de réglage du débit de la sortie du gaz libéré de la bouteille.

3. Dispositif (1) selon la revendication 2, **caractérisé en ce qu'**au moins deux orifices (109) de calibrage différent sont percés à travers la pièce constituant la première extrémité (100) de l'axe vanne (10), un troisième orifice (25) étant percé dans le corps (2) du robinet, ce dernier joignant la sortie (5) de gaz, la deuxième partie de rotation du volant (4) de commande mettant en vis-à-vis l'un des deux orifices (109) et le troisième orifice (25) pour déterminer le débit de passage du gaz vers la sortie (5).

4. Dispositif (1) selon l'une des revendications 1 à 3, **caractérisé en ce que**, en position d'ouverture ou de fermeture de la vanne du robinet, il comporte des moyens de maintien, qui lors de l'actionnement du volant (4), maintiennent le volant (4) en saillie constante par rapport au corps (2) du robinet.

5. Dispositif (1) selon la revendication 4, **caractérisé en ce que** les moyens de maintien de la saillie du volant (4) par rapport au corps (2) du robinet comportent des moyens de butée au mouvement du volant (4) vers l'intérieur ou vers l'extérieur du corps (2) du robinet.

6. Dispositif selon l'une des revendications 1 à 5, **caractérisé en ce que** la première (100) et la deuxième (101) extrémité de l'axe vanne (10) comprennent chacune un crénelage collaborant avec celui de l'autre extrémité pour être solidaire en rotation.

7. Dispositif selon l'une des revendications 1 à 6, **caractérisé en ce que** la première (100) et la deuxième (101) extrémité sont reliés par un ressort venant serrer un joint pris entre la première extrémité (100) et le corps (2) du robinet.

8. Dispositif (1) selon l'une des revendications 1 à 7, **caractérisé en ce que** les moyens mobiles d'ouverture et de fermeture de la vanne sont constitués d'un clapet (11) ayant le mouvement de translation linéaire dans le corps (2) du robinet.

9. Dispositif (1) selon l'une des revendications 1 à 8, **caractérisé en ce que** la position extrême de butée est définie par une pièce (300) maintenue fixe par rapport au corps (2) du robinet par des moyens (200) de maintien.

10. Dispositif (1) selon la revendication 8 ou 9, **caractérisé en ce que** le clapet (11) est monté sur un ressort (114), le clapet (11) comportant des moyens (113, 115) de compression du ressort (114) lorsque la deuxième extrémité (101) vient appuyer sur l'extrémité du clapet.

11. Dispositif (1) selon l'une des revendications 1 à 10, **caractérisé en ce qu'**il comporte un dispositif (6) de détente des gaz placé en aval de la vanne de sortie du gaz de la bouteille.

12. Dispositif (1) selon la revendication 11, **caractérisé en ce qu'**il comporte, entre le dispositif de détente et la vanne de sortie du gaz de la bouteille, un système (8) à pression résiduelle au-dessous de laquelle un clapet (80) ne laisse plus passer le gaz vers le dispositif (6) de détente.

13. Dispositif (1) selon l'une des revendications 1 à 12, **caractérisé en ce qu'**il comprend un manomètre (9) joint par un conduit (31) situé en amont de la vanne de sortie du gaz pour mesurer la pression dans la bouteille de gaz.

## Patentansprüche

1. Absperrvorrichtung (1) für eine Druckgasflasche mit einem Anschluss zum Anschließen an die Gasaustrittsöffnung einer Gasflasche sowie mit einem Druckgasauslass (5), wobei die Vorrichtung ein Handrad (4) mit Mitteln zum Steuern des Schließens des Ventils bzw. des Öffnens des Ventils zum Auslassen von Gas aus der Flasche und mit Mitteln zum Einstellen der Auslassmenge an aus der Flasche ausgelassenem Gas enthält,
wobei das Handrad (4) in beiden Richtungen drehend betätigbar ist, wobei das Handrad (4) bei seiner Drehbewegung in Öffnungsrichtung über einen ersten Teil der Drehung das Öffnen des Ventils zum Auslassen von Gas aus der Flasche und über einen zweiten Teil der Drehung das Einstellen der Gasauslassmenge zum Ventil (5) der Absperrvorrichtung steuert,
wobei das Handrad (4) fest mit einer Ventilachse (10) verbunden ist, die über Dichtmittel in dem Körper (2) der Absperrvorrichtung gelagert ist, wobei mit Betätigung des Steuerhandrads (4) über die Ventilachse (10) bewegliche Mittel (11) zum Öffnen bzw. Schließen des Ventils der Flasche gesteuert werden,
wobei die Vorrichtung **dadurch gekennzeichnet ist, dass** das erste Ende (100) der Ventilachse (10) an dem Handrad (4) befestigt ist, wobei das andere, sogenannte zweite Ende (101) der Ventilachse (10) drehfest mit dem ersten Ende (100) verbunden ist, das drehfest mit dem Handrad (4) verbunden ist und gegenüber dem ersten Ende (100) frei translatorisch verschiebbar ist, wobei das zweite Ende (101) der Ventilachse (10) in den Körper (2) der Absperrvorrichtung eingeschraubt ist, wobei die Drehung des Handrads (4) die Schraubenbewegung des zweiten Endes (101) der Ventilachse (10) im Körper (2) der Absperrvorrichtung steuert, wobei die beweglichen Mittel eine Verschiebefreiheit zwischen einer Endstellung zum Absperren der Gaszufuhr und, zum Öffnen der Gaszufuhr, einer Anschlagendstellung oder einer Zwischenstellung aufweisen, welche von der Stellung des zweiten Endes (101) der Ventilachse (10) bestimmt wird.

2. Vorrichtung (1) nach Anspruch 1, **dadurch gekennzeichnet, dass** die Ventilachse (10) Mittel zum Einstellen der Auslassmenge an aus der Flasche ausgelassenem Gas enthält.

3. Vorrichtung (1) nach Anspruch 2, **dadurch gekennzeichnet, dass** zumindest zwei unterschiedlich kalibrierte Öffnungen (109) durch das Teil gebohrt sind, das ein erstes Ende (100) der Ventilachse (10) bildet, wobei eine dritte Öffnung (25) in den Körper (2) der Absperrvorrichtung gebohrt ist, wobei letztere auf den Gasauslass (5) trifft, wobei über den zweiten Teil der Drehung des Handrads (4) eine der beiden Öffnungen (109) und die dritte Öffnung (25) der Absperrvorrichtung einander gegenüber gebracht werden, um die Gasdurchflussmenge zum Auslass (5) zu bestimmen.

4. Vorrichtung (1) nach einem der Ansprüche 1 bis 3, **dadurch gekennzeichnet, dass** sie in der Öffnungs- bzw. Schließstellung des Ventils Haltemittel enthält, die bei Betätigung des Handrads (4) das Handrad (4) bezüglich des Körpers (2) der Absperrvorrichtung konstant vorspringend halten.

5. Vorrichtung (1) nach Anspruch 4, **dadurch gekennzeichnet, dass** die Mittel zum Halten des Vorspringens des Handrads (4) bezüglich des Körpers (2) der Absperrvorrichtung Anschlagmittel für die Bewegung des Handrads (4) nach innerhalb oder nach außerhalb des Körpers (2) der Absperrvorrichtung enthalten.

6. Vorrichtung nach einem der Ansprüche 1 bis 5, **dadurch gekennzeichnet, dass** das erste Ende (100) und das zweite Ende (101) der Ventilachse (10) jeweils eine Auszackung aufweisen, die mit derjenigen des anderen Endes zusammenwirkt, um eine drehfeste Verbindung zu schaffen.

7. Vorrichtung nach einem der Ansprüche 1 bis 6, **dadurch gekennzeichnet, dass** das erste Ende (100) und das zweite Ende (101) über eine Feder verbunden sind, die eine Dichtung einklemmt, welche zwischen dem ersten Ende (100) und dem Körper (2) der Absperrvorrichtung aufgenommen ist.

8. Vorrichtung (1) nach einem der Ansprüche 1 bis 7, **dadurch gekennzeichnet, dass** die beweglichen Mittel zum Öffnen und Schließen des Ventils aus einem Ventilelement (11) bestehen, das eine lineare Translationsbewegung im Körper (2) der Absperrvorrichtung hat.

9. Vorrichtung (1) nach einem der Ansprüche 1 bis 8, **dadurch gekennzeichnet, dass** die Anschlagendstellung von einem Teil (300) definiert wird, das bezüglich des Körpers (2) der Absperrvorrichtung über Haltemittel (200) festgehalten wird.

10. Vorrichtung (1) nach Anspruch 8 oder 9, **dadurch gekennzeichnet, dass** das Ventilelement (11) auf einer Feder (114) angebracht ist, wobei das Ventilelement (11) Mittel (113, 115) enthält, um die Feder (114) zusammenzudrücken, wenn das zweite Ende (101) auf das Ende des Ventilelements drückt.

11. Vorrichtung (1) nach einem der Ansprüche 1 bis 10, **dadurch gekennzeichnet, dass** sie eine Gasexpansionseinrichtung (6) enthält, die dem Ventil zum Auslassen von Gas aus der Flasche nachgelagert ist.

12. Vorrichtung (1) nach Anspruch 11, **dadurch gekennzeichnet, dass** sie zwischen Expansionseinrichtung und Venteil zum Auslassen von Gas aus der Flasche ein System (8) für Restdruck enthält, unterhalb dessen ein Ventilelement (80) das Gas nicht mehr zur Expansionseinrichtung (6) durchlässt.

13. Vorrichtung (1) nach einem der Ansprüche 1 bis 12, **dadurch gekennzeichnet, dass** sie ein Manometer (9) enthält, das mit einer Leitung (31) versehen ist, die dem Ventil zum Auslassen von Gas vorgelagert ist, um den Druck in der Gasflasche zu messen.

## Claims

1. A tap device (1) for a pressurised gas cylinder comprising a connector to be connected to the gas outlet opening of a gas cylinder, and also a pressurised gas outlet (5), wherein the device comprises a handwheel (4) which includes means for controlling the closing of the valve of the tap or for opening the valve in order to release gas from the cylinder, and means for regulating the output of released gas leaving the cylinder,
the handwheel (4) being actuated in rotation in both directions, wherein in a first stage of rotation in its rotational movement in the direction of opening, the handwheel (4) controls the opening of the valve in order to release gas from the cylinder and, in a second stage of rotation the handwheel controls the regulation of the output of gas released to the outlet (5) of the tap,
the handwheel (4) being integral with a valve spindle (10) mounted by sealing means in the body (2) of the tap, the actuation of the control handwheel (4) controlling, via the valve spindle (10), mobile means (11) for opening and closing the valve of the cylinder,
said device being **characterised in that** the first end (100) of the valve spindle (10) is fixed to the handwheel (4) and the other end, known as the second end (101), of the valve spindle (10), being integral in rotation with the first end (100), which is integral with the handwheel (4) and free in translation relative to the first end (100), the second end (101) of the valve spindle (10) being screwed into the tap body (2), the rotation of the handwheel (4) controlling the helical movement of the second end (101) of the valve spindle (10) in the tap body (2), the mobile means having a freedom of translation between an extreme position for sealing off the incoming gas and, in order to open the gas inlet, an extreme stop position or an intermediate position determined by the position of the second end (101) of the valve spindle (10).

2. The device (1) according to claim 1, **characterised in that** the valve spindle (10) comprises the means for regulating the output of released gas leaving the cylinder.

3. The device (1) according to claim 2, **characterised in that** at least two openings (109) of different sizes are bored through the part constituting the first end (100) of the valve spindle (10), a third opening (25) being bored in the tap body (2), the latter leading to the gas outlet (5), the second stage of rotation of the control handwheel (4) putting one of the two openings (109) and the third opening (25) opposite each other in order to determine the output of gas passing towards the outlet (5).

4. The device (1) according to one of claims 1 to 3, **characterised in that**, in the open or closed position of the tap valve, it comprises holding means which, when the handwheel (4) is actuated, keep the handwheel (4) projecting by a constant amount relative to the tap body (2).

5. The device (1) according to claim 4, **characterised in that** the means for maintaining the projection of the handwheel (4) with respect to the tap body (2) comprise means for stopping the movement of the handwheel (4) towards the inside or the outside of the tap body (2).

6. The device according to one of claims 1 to 5, **characterised in that** the first (100) and the second (101) ends of the valve spindle (10) each comprise notching cooperating with that of the other end so as to be integral in rotation.

7. The device according to one of claims 1 to 6, **characterised in that** the first (100) and second (101) ends are connected by a spring that tightens a joint caught between the first end (100) and the tap body (2).

8. The device (1) according to one of claims 1 to 7, **characterised in that** the mobile means for opening and closing the valve are constituted by a clack valve (11) having linear displacement within the tap body (2).

9. The device (1) according to one of claims 1 to 8, **characterised in that** the extreme stop position is defined by a part (300) kept fixed with respect to the tap body (2) by holding means (200).

10. The device (1) according to claim 8 or 9, **characterised in that** the clack valve (11) is mounted on a spring (114), the clack valve (11) comprising means (113, 115) for compressing the spring (114) when the second end (101) bears on the end of the clack valve.

11. The device (1) according to one of claims 1 to 10, **characterised in that** it comprises a gas expansion device (6) placed downstream from the gas outlet valve of the cylinder.

12. The device (1) according to claim 11, **characterised in that**, between the relaxation device and the gas outlet valve of the cylinder, it comprises a residual pressure system (8), below which pressure a clack valve (80) no longer allows gas to pass towards the relaxation device (6).

13. The device (1) according to one of 1 to 12, **characterised in that** it comprises a pressure gauge (9) connected via a conduit (31) located upstream of the gas outlet valve in order to measure the pressure in the gas cylinder.
